# EUROPEAN PATENT SPECIFICATION

(11) **EP 4 534 981 B1**
(45) Date of publication and mention of the grant of the patent: **01.07.2026**
(21) Application number: 24204324.8
(22) Date of filing: 02.10.2024
(51) Int. Cl.: G01N 21/65

(54) **SURFACE ENHANCED RAMAN SPECTROSCOPY CHIP ON A TEXTURED SUBSTRATE AND ITS FABRICATION METHOD**
CHIP FÜR OBERFLÄCHENVERSTÄRKTE RAMAN-SPEKTROSKOPIE AUF EINEM TEXTURIERTEN SUBSTRAT UND SEIN HERSTELLUNGSVERFAHREN
PUCE DE SPECTROSCOPIE RAMAN EXALTÉE DE SURFACE SUR UN SUBSTRAT TEXTURÉ ET SA MÉTHODE DE FABRICATION

(30) Priority: 03.10.2023 US 202363542143 P; 06.10.2023 US 202363542884 P
(43) Date of publication of application: 09.04.2025
(73) Proprietor: Thorlabs, Inc., Newton, NJ 07860 (US); Thorlabs GmbH, 85232 Bergkirchen (DE)
(72) Inventor: SINGER, Matthew, Newton, NJ 07860 (US); PRIORE, Ryan Joseph, Newton, NJ 07860 (US); YE, Longfei, Newton, NJ 07860 (US); BAIGAR, Erik, 85232 Bergkirchen (DE)
(74) Representative: Grättinger Möhring von Poschinger Patentanwälte Partnerschaft mbB

(56) References cited:
- US-A1- 2011 128 536
- SHEVCHENKO ANDRIY ET AL: "Large-area nanostructured substrates for surface enhanced Raman spectroscopy", APPLIED PHYSICS LETTERS, AMERICAN INSTITUTE OF PHYSICS, 2 HUNTINGTON QUADRANGLE, MELVILLE, NY 11747, vol. 100, no. 17, 171913, 26 April 2012 (2012-04-26), pages 1 - 4, XP012155741, ISSN: 0003-6951, [retrieved on 20120426], DOI: 10.1063/1.4707158
- VO-DINH T: "Surface-enhanced Raman spectroscopy using metallic nanostructures", TRAC TRENDS IN ANALYTICAL CHEMISTRY, ELSEVIER, AMSTERDAM, NL, vol. 17, no. 8/9, 1998, pages 557 - 582, XP000667508, ISSN: 0165-9936, DOI: 10.1016/S0165-9936(98)00069-7
- DHAWAN A ET AL: "Methodologies for Developing Surface-Enhanced Raman Scattering (SERS) Substrates for Detection of Chemical and Biological Molecules", IEEE SENSORS JOURNAL, IEEE, USA, vol. 10, no. 3, March 2010 (2010-03-01), pages 608 - 616, XP011290000, ISSN: 1530-437X, DOI: 10.1109/JSEN.2009.2038634
- OH YOUNG-JAE ET AL: "Engineering Hot Spots on Plasmonic Nanopillar Arrays for SERS: A Review", BIOCHIP JOURNAL, KOREAN BIOCHIP SOC, SEOUL , SOUTH KOREA, vol. 10, no. 4, 13 December 2016 (2016-12-13), pages 297 - 309, XP036126834, ISSN: 1976-0280, [retrieved on 20161213], DOI: 10.1007/S13206-016-0406-2
- HU QI ET AL: "Preparation and SERS performance of gold nanoparticles-decorated patterned silicon substrate", APPLIED SURFACE SCIENCE,, vol. 638, 157966, 6 July 2023 (2023-07-06), pages 1 - 10, XP087391835, DOI: 10.1016/J.APSUSC.2023.157966

## Description

### CROSS REFERENCE TO RELATED APPLICATIONS

This application claims the benefit of U.S. Provisional Patent Application No. 63/542,143 filed on October 3, 2023 and U.S. Provisional Patent Application No. 63/542,884 filed on October 6, 2023. The disclosures of U.S. Provisional Patent Application No. 63/542,143 and U.S. Provisional Patent Application No. 63/542 884.

### TECHNICAL FIELD

The present disclosure generally relates to Raman spectroscopy devices, and more particularly to a surface enhanced Raman spectroscopy (SERS) chip on a textured substrate.

### BACKGROUND

Many Raman spectroscopy devices are commercially available for various spectroscopy applications. It is a logical step to provide users with an accessory to these Raman spectroscopy products. Considering many applications for Raman spectroscopy require low concentration and/or fragile samples, providing users with a SERS chip, to allow for higher sensitivity while using lower laser power and smaller sample size, is necessary.

SERS chips are a common area of research in academia. Currently areas of research include but are not limited to: increasing electric field enhancement through smaller nanogaps between metal nanoparticles, lithography free fabrication, higher Laser Induced Damage Threshold (LIDT), single molecule detection, lower background fluorescence, broadband response, and higher repeatability. While all these sub areas of research are innovative in their own way, there is a long-felt need for a SERS chip that can simultaneously solve many of these problems including lithography free fabrication, higher LIDT, lower background fluorescence, broadband response, long shelf life, and higher repeatability. Previous attempts have not been successful because generally, only one to two of these issues are being addressed in any given academic groups work. Additionally, commercial suppliers usually design these chips to address one major problem at a time. For example, there exist a commercially available SERS chip that can withstand very high laser threshold, but it cannot be used at excitation wavelengths besides 785nm. Furthermore, there exist a SERS chip that does not require lithography but has a significant fluorescent background signal.

A. Shevchenko et al., "Large-area nanostructured substrates for surface enhanced Raman spectroscopy", Applied Physics Letters 100, 171913 (2012), discloses a chip for surface enhanced Raman spectroscopy (SERS), comprising: a substrate having a surface that is textured with a plurality of pillars formed randomly on the surface with a desired average pillar height, average pillar width and/or pillar density; wherein the plurality of pillars are encased by a layer of have on top (and optionally on the side walls) nanoislands of thermally annealed metal.

Other relevant prior art disclosures are:
US 2011/128536 A1;
A. Dhawan et al., "Methodologies for Developing Surface-Enhanced Raman Scattering (SERS) Substrates for Detection", IEEE Sensors Journal, Vol. 10, Nr. 3, 2010;
T. Vo-Dinh, "Surface-enhanced Raman spectroscopy using metallic nanostructures", Trends in analytical chemistry, col. 17, nos. 8+9, 1998;
Y-J Oh et al., "Surface-enhanced Raman spectroscopy using metallic nanostructures", BioChip J. (2016) 10(4): 297-309;
Q. Hu et al., "Preparation and SERS performance of gold nanoparticles-decorated patterned silicon substrate", Applied Surface Science 638 (2023) 157966.

### SUMMARY

Traditionally, SERS chips rely on tight tolerances from lithography and other nanofabrication techniques to decrease the interparticle distance in the X-Y plane and allow for extremely high electric field enhancement. For chips that utilize "random" nanoparticle or non-periodic surfaces, the substrate in which the chips are fabricated is generally flat in the X-Y lane with minimal surface roughness or features in the Z-axis. In one embodiment of the present disclosure, a SERS Chip utilizes the textured substrate, which generally goes against the traditional approach of having a flat substrate. While the present disclosure proposes an opposite of the traditional design, the innovation lies in the changing gap distance between metal surfaces to be in the vertical direction (z-axis) of the nanopillars to allow for a broadband response.

According to the present disclosure, a Surface Enhanced Raman Spectroscopy (SERS) chip on a substrate, e.g., Fused Silica (FS) or Al₂O₃ sapphire substrate, represents the combination of a textured surface with the addition of metal deposition (primarily gold but can also include silver, aluminum, and other metals with negative real permittivity in the Raman excitation range) for plasmonic response. The changing pillar width, as one moves from the tip to base, allows for a broad band plasmonic response to incident light. This plasmonic response causes significant electric field enhancement which allows for the nonlinear Raman scatter effect to be enhanced. Additionally, the tuning of the pillar height and gold topcoat thickness can change the SERS enhancement and fluorescence response. These parameters (pillar height and metal thickness) can be tuned to optimize the SERS signal and minimize the fluorescence signal in both existing Raman systems as well as Raman systems that utilizes an embodiment of the present disclosure.

An embodiment of the present disclosure provides a method for fabrication of a chip for surface enhanced Raman spectroscopy (SERS) as claimed in claim 1, including: providing a substrate; texturing a surface of the substrate to form a plurality of pillars randomly on the surface until a desired average pillar height, average pillar width and/or pillar density is/are reached; depositing a metal onto the surface of the textured substrate; and thermally annealing the metal such that the metal forms a layer encasing the pillars.

An embodiment of the present disclosure provides a chip for surface enhanced Raman spectroscopy (SERS) as claimed in claim 14, including: a substrate having a surface that is textured with a plurality of pillars formed randomly on the surface with a desired average pillar height, average pillar width and/or pillar density; wherein the plurality of pillars are encased by a layer of thermally annealed metal.

### BRIEF DESCRIPTION OF THE DRAWINGS

FIG. 1 shows a high-level process of fabricating a SERS chip according to one embodiment.
FIG. 2 shows a light matter interaction of excitation laser and gold coating of a SERS chip according to one embodiment.
FIG. 3 shows a side view of a SERS chips according to one embodiment, highlighting the random pillar height and periodicity.
FIG. 4 shows the performance of a blank FS flat substrate sample compared to a flat FS substrate sample with gold deposited on the surface according to one embodiment.
FIG. 5 shows the performance of an unannealed sample compared to an annealed sample according to one embodiment.
FIG. 6 shows the performance of a flat substrate compared to a textured substrate according to one embodiment.
FIG. 7 shows the performance of a textured substrate sample compared to a textured substrate sample having a bottom gold mirror according to one embodiment.
FIG. 8 shows the performance of the backside of the substrate compared to the frontside of the substrate according to one embodiment.

### DETAILED DESCRIPTION

The description of illustrative embodiments according to principles of the present disclosure is intended to be read in connection with the accompanying drawings, which are to be considered part of the entire written description. In the description of embodiments of the disclosure disclosed herein, any reference to direction or orientation is merely intended for convenience of description and is not intended in any way to limit the scope of the present disclosure. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the disclosure are illustrated by reference to the exemplified embodiments. Accordingly, the disclosure expressly should not be limited to such exemplary embodiments illustrating some possible non-limiting combination of features that may exist alone or in other combinations of features; the scope of the disclosure being defined by the claims appended hereto.

This disclosure describes the best mode or modes of practicing the disclosure as presently contemplated. This description is not intended to be understood in a limiting sense, but provides an example of the disclosure presented solely for illustrative purposes by reference to the accompanying drawings to advise one of ordinary skill in the art of the advantages and construction of the disclosure. In the various views of the drawings, like reference characters designate like or similar parts.

It is important to note that the embodiments disclosed are only examples of the many advantageous uses of the innovative teachings herein. In general, statements made in the specification of the present application do not necessarily limit any of the various claimed disclosures. Moreover, some statements may apply to some inventive features but not to others. In general, unless otherwise indicated, singular elements may be in plural and vice versa with no loss of generality.

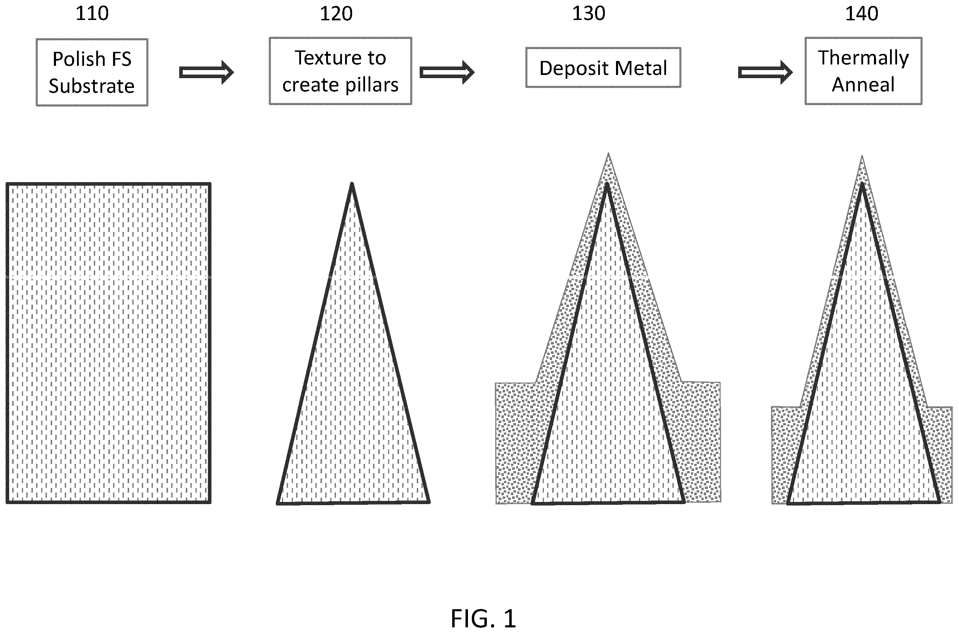

The fabrication of a SERS Chip according to one embodiment is shown in FIG. 1 (for clarity, only one pillar is shown). Step 110: The process starts off with a polished FS substrate (for example, a 4-inch wafer with 1mm thickness, but can be other substrate sizes). This substrate material is intentionally chosen due to its transparency in the visible range. Additionally, FS or quartz is chosen due to its chemical inertness and commercial availability that is compatible with many pre and post processing supplements. The general literature generally uses a substrate such as silicon or textile due to the existing fabrication methods suited for these substrates as well as the metals' ability to adhere to them well. However, one embodiment of the present disclosure chooses the FS substrate to allow for measurement of SERS signal from both the textured and coated side as well as the untextured side.

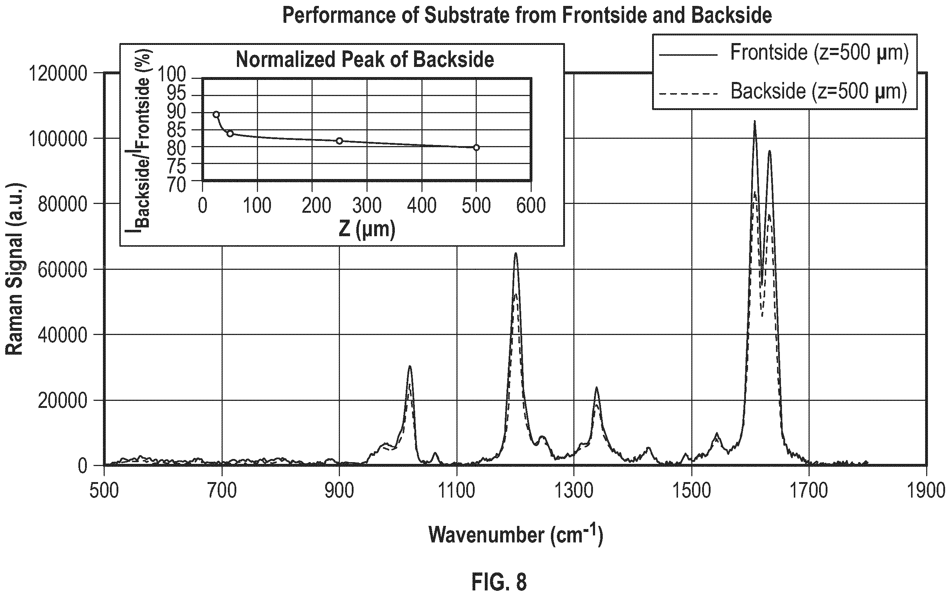

Since the light can radiate through the structure, one embodiment of the present disclosure can enable a unique measurement modality of through substrate SERS. As can be seen from FIG. 8, the Raman signal from the backside of the substrate is comparable to the frontside. The normalized peak of the backside is 80% to 90% of the intensity of the frontside.

Step 120: A modified unmasked texturing process through Reactive Ion Etching (RIE) is employed to change the resulting pillars to the optimized height. In one embodiment, the texture process is based on an etching method for producing a textured surface with an additive thin film as disclosed in U.S. Patent Application No. 18/234 506.

In other embodiments, the texturing can be produced by dry etching, wet etching, laser ablation or chemical wet processing. Additionally, in one embodiment, the pillar height is tuned based on excitation wavelengths as well as molecules of interest. In one embodiment, the pillar height can vary from 100 - 1500nm, and the periodicity can vary from 50 - 500nm. Note that the periodicity value is an average measure of the distance from the peak of one pillar to the peak of the next, which depends on the pillar width and density.

Step 130: Following texturing, a layer of metal is deposited onto the textured surface. Note that different metals are suitable for making SERS chips designed for different laser excitation wavelengths. In one embodiment, gold is used in chips for 785nm laser excitation. In another embodiment, other metals, such as silver, aluminum, copper, palladium, nickel, and platinum is used in chips for 532nm laser excitation. In the present disclosure, for simplicity, gold is used as an example to illustrate various aspects of the proposed SERS chips. It is understood that essentially the same inventive principles illustrated in the gold example can be applied to other metals, e.g., silver, aluminum, copper, palladium, nickel, platinum, and alloy of two or more metals. In one embodiment, a combination of multiple metals can be simultaneously deposited on the textured surface, the proportions of the multiple metals can be the same or different. In one embodiment, different individual metal, mixture of metals or alloys are sequentially deposited on the textured surface.

In one example embodiment, a relatively thick layer of gold is deposited onto the textured surface. In one embodiment, no adhesion layer is applied to the substrate. Traditionally, gold deposition for SERS chips is very thin (on the order of 1 - 50nm). In an embodiment of the present disclosure, the deposit is referred to as a thick gold layer which is >50nm. In one embodiment, sufficient gold is deposited such that the valleys between the pillars are filled with gold.

Optionally, before the deposit of gold, the substrate is coated in a thin chrome adhesion layer to allow the gold to stick. In one embodiment, additional layers of material (metal or dielectric) may be applied to the substrate for adhesion, molecule functionalization, or passivation.

Step 140: Finally, a thermal annealing process is employed to change the morphology of the deposited gold such that we achieved a uniform layer encasing the pillars. In one embodiment, the substrate, after metal deposition, is placed into an N₂ purged oven. In one example embodiment of gold deposit, the substrate is then annealed at 150 degrees Celsius for 60 minutes. It is understood that the annealing temperature and duration depends on the composition of the metal deposit, as well as the desired Raman scattering parameters. In one embodiment, the annealing is under a specific atmosphere, e.g., N₂, H₂, Ar, etc.

Once the sample is fabricated, the wafer is diced into smaller chips (e.g., 4.5mm x 4.5mm) or use single round substrates for larger chips. Additionally, depending on the excitation laser, this chip is modified to be a metal-insulator-metal (MIM) structure with the addition of a metal mirror under the chip according to one embodiment. This can allow for any transmitted light to be reflected back onto the active gold layer for a second pass interaction.

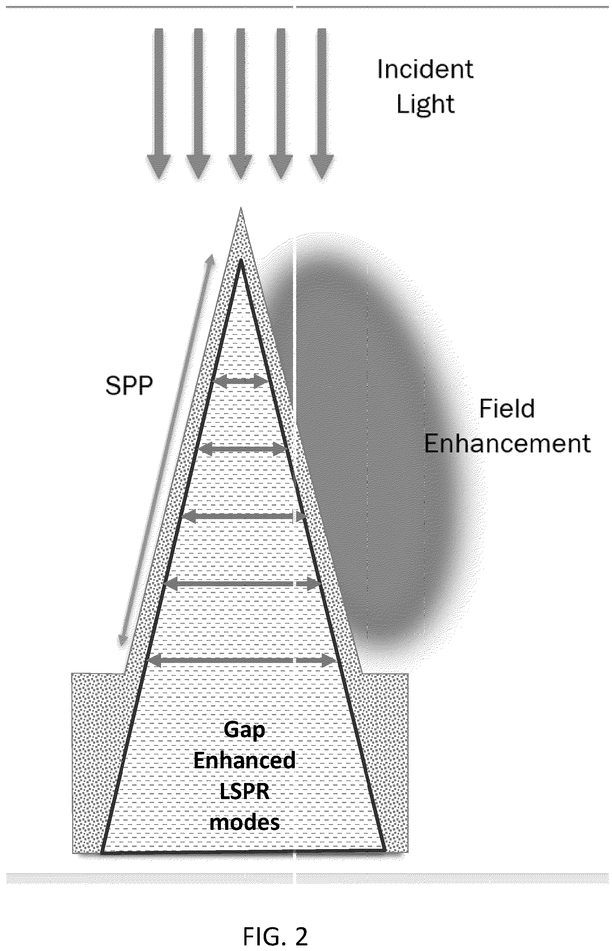

The physical mechanism for understanding how these SERS chips work is based off the phenomenon of Surface Plasmon Resonance (SPR). Specifically, the SERS chip is configured to excite Surface Plasmon Polariton (SPP) and Localized Surface Plasmon Resonance (LSPR) through the light-matter interaction of the excitation laser and gold coating. As shown in FIG. 2, incident light can excite SPP's on the thin gold layer. Moving from the tip to the base, the width of the pillar changes, allowing a changing gap distance between gold surfaces. As the gap distance changes, the SPP's can induce image charges in the opposite gold surface under a different resonant condition. The multiple modes supported in the pillar allow for broadband light trapping in the pillar. Once the light is trapped in the pillar, the chip can induce gap LSPR modes which generate high electric field strengths along the entire height of the pillar. This enhanced electric field can increase the nonlinear response of Raman scattering and provide the high detection sensitivity of a SERS chip. Additionally, the gold thickness is tuned to allow for relatively high absorption of the Raman excitation light while maintaining higher reflectance in the Raman shift region, thereby giving a preferential scattering direction for the Raman shifted light.

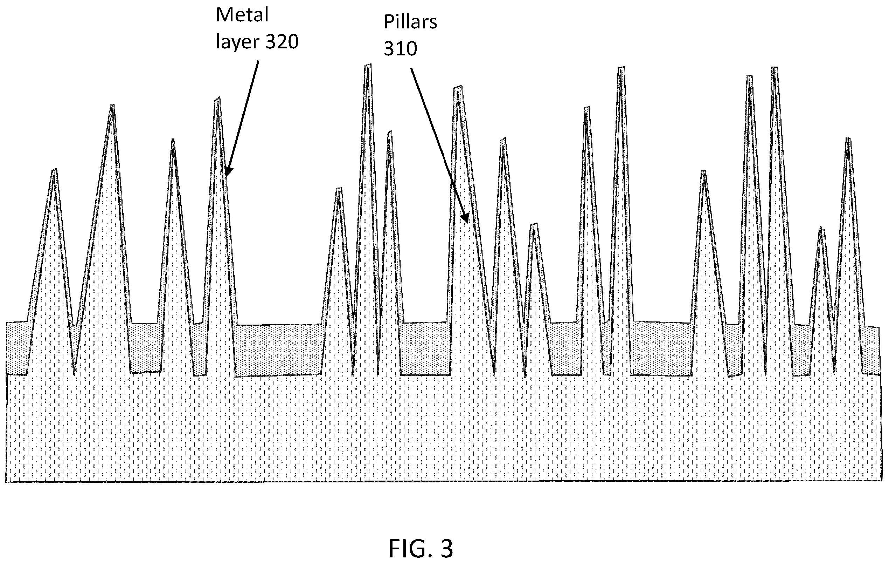

FIG. 3 shows a side view of a SERS chip according to one embodiment. As can be seen from FIG. 3, the pillars 310 are formed randomly on the substrate, and the pillars 310 are encased by a gold layer 320. The average pillar height, average pillar width and/or pillar density can be adjusted in the texturing process.

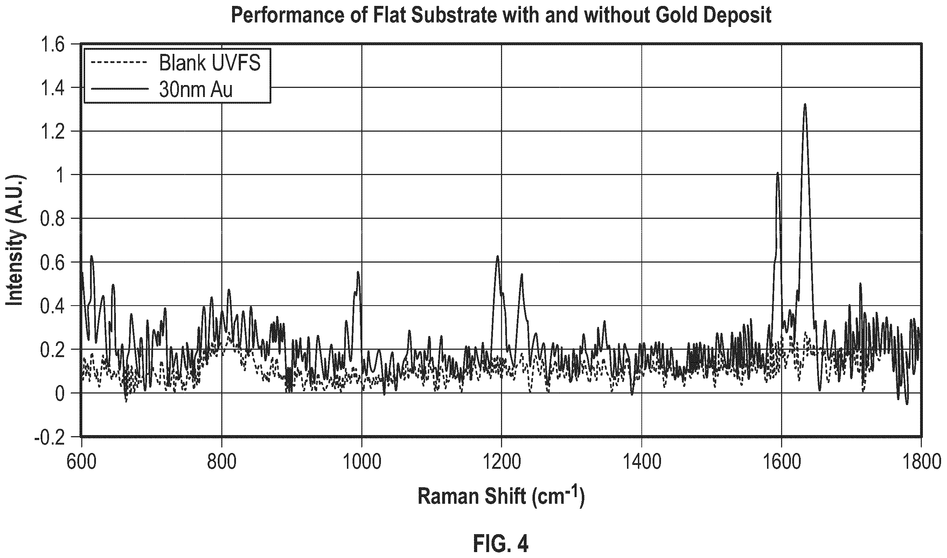

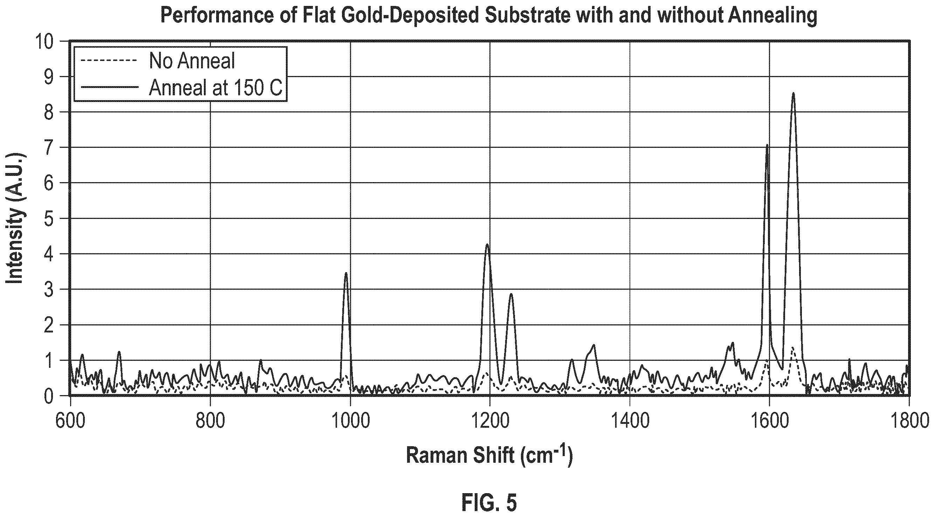

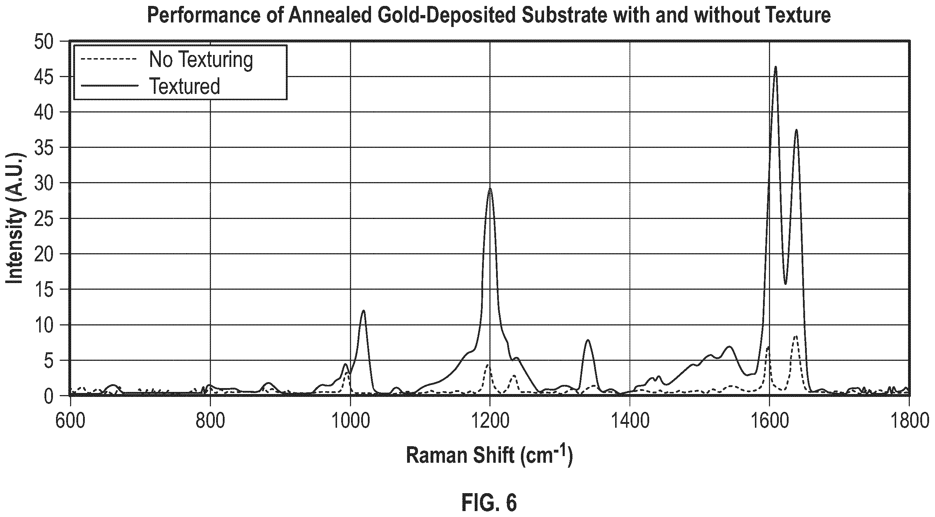

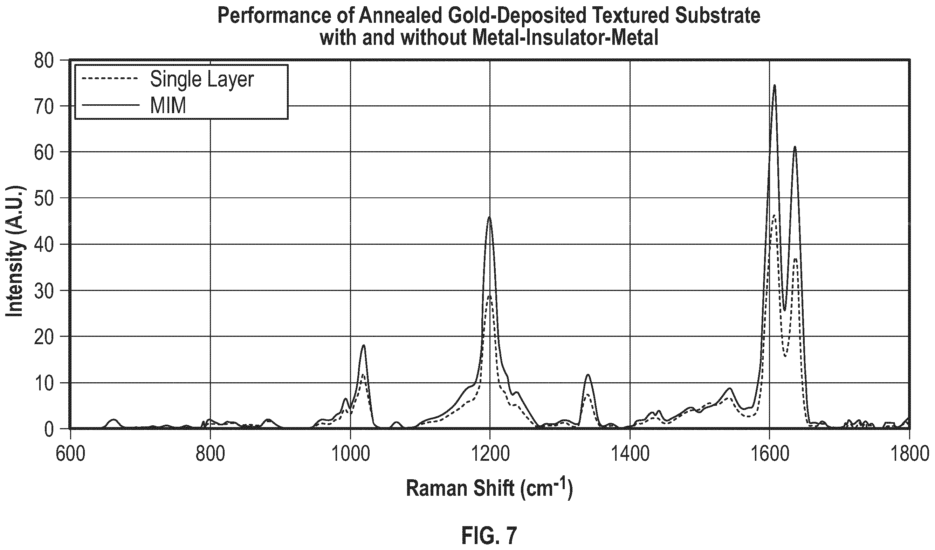

FIGS. 4 - 7 are used to demonstrate how the textured SERS chip according to one embodiment of the present disclosure can provide higher Raman signal compared to untextured samples. In this demonstration, a series of samples are tested with trans-1,2-bis (4-pyridyl) ethylene (BPE) molecules coated on the surfaces. Each sample received a 2.5µl drop of 100mM ethanol based BPE solution. FIG. 4 is a comparison of the performance of a blank FS flat substrate against a flat FS substrate with gold deposited on the surface. It can be seen that the addition of gold allows the detection of a low Raman signal of the BPE. In FIG. 5, it is shown that how thermal annealing can further enhance the signal by changing the morphology of the gold layer to allow for greater absorption of the excitation light. FIG. 6 is a comparison of the performance of the thermally annealed sample to a sample that has a textured substrate, also with gold deposition and thermal annealing. It can clearly be seen that the texturing enhanced the signal yet again. FIG. 7 shows the configuration that a bottom gold mirror is added below the textured substrate. This structure is in a metal-insulator-metal (MIM) configuration. This structure yet again provides further enhancement due to any transmitted light reflecting off the back mirror and having a second pass interaction with the active gold layer and pillars.

With regard to the performance of the substrates, in other areas, such as lifetime, repeatability, and laser damage, an embodiment of the present disclosure can achieve advantageous performance characteristics that the lifetime of the substrate is > 1 year, spot to spot repeatability is < 16%, and the substrate can withstand over 5W/cm² of CW laser power.

While the present disclosure has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the claims.

## Claims

1. A method for fabrication of a chip for surface enhanced Raman spectroscopy (SERS), comprising:
providing a substrate (110);
texturing a surface of the substrate (120) to form a plurality of pillars randomly on the surface until a desired average pillar height, average pillar width and/or pillar density is/are reached;
depositing a metal onto the surface of the textured substrate (130); and
thermally annealing the metal (140) such that the metal forms a layer encasing the pillars.

2. The method of claim 1, before the depositing of the metal onto the surface of the textured substrate, further comprising coating the surface of the textured substrate with additional layers of material for adhesion, molecule functionalization, or passivation.

3. The method of claim 1, further comprising providing a metallic mirror under the substrate such that transmitted light through the substrate is reflected back onto the metal layer for a second pass of light-matter interaction.

4. The method of claim 1, wherein each pillar has its width changes from the tip to the base, resulting in changes in a gap distance between two adjacent pillars along the tip to base direction.

5. The method of claim 4, wherein the desired average pillar height, average pillar width and/or pillar density are selected to support multiple localized surface plasmon resonance (LSPR) modes when the surface is illuminated by a laser light of a specific wavelength.

6. The method of claim 1, wherein the pillar height varies from 100 - 1500nm, and the periodicity varies from 50 - 500nm.

7. The method of claim 1, wherein the metal comprises at least one of: gold, silver, aluminum, copper, palladium, nickel, and platinum.

8. The method of claim 1, wherein multiple metals are simultaneously or sequentially deposited on the textured surface.

9. The method of claim 1, wherein the deposited metal has a thickness of at least 50nm.

10. The method of claim 1, wherein the substrate is a fused silica (FS) substrate, quartz substrate or Al₂O₃ sapphire substrate.

11. The method of claim 1, wherein the texturing of the surface of the substrate comprises a reactive ion etching (RIE), dry etching, wet etching, laser ablation or chemical wet process.

12. The method of claim 1, further comprising configuring the chip for SERS from both the side of the substrate with metal coating and the opposite side of the substrate without metal coating.

13. The method of claim 1, wherein the annealing is under an atmosphere comprising at least one of N₂, H₂ and Ar.

14. A chip for surface enhanced Raman spectroscopy (SERS), comprising:
a substrate having a surface that is textured with a plurality of pillars (310) formed randomly on the surface with a desired average pillar height, average pillar width and/or pillar density;
wherein the plurality of pillars are encased by a layer of thermally annealed metal (320).

## Patentansprüche

1. Verfahren zur Herstellung eines Chips für oberflächenverstärkte Raman-Spektroskopie (SERS), umfassend:
Bereitstellen eines Substrats (110),
Texturieren einer Oberfläche des Substrats (120), um eine Mehrzahl von Säulen zufällig auf der Oberfläche zu bilden, bis eine gewünschte durchschnittliche Säulenhöhe, durchschnittliche Säulenbreite und/oder Säulendichte erreicht ist/sind,
Abscheiden eines Metalls auf der Oberfläche des texturierten Substrats (130) und
thermisches Tempern des Metalls (140), so dass das Metall eine Schicht bildet, die die Säulen umschließt.

2. Verfahren nach Anspruch 1, vor dem Abscheiden des Metalls auf der Oberfläche des texturierten Substrats, ferner umfassend das Beschichten der Oberfläche des texturierten Substrats mit zusätzlichen Materialschichten zur Haftung, Molekülfunktionalisierung oder Passivierung.

3. Verfahren nach Anspruch 1, ferner umfassend das Bereitstellen eines Metallspiegels unter dem Substrat, so dass durch das Substrat transmittiertes Licht für einen zweiten Durchgang der Licht-Materie-Wechselwirkung auf die Metallschicht zurückreflektiert wird.

4. Verfahren nach Anspruch 1, wobei jede Säule ihre Breite von der Spitze zur Basis ändert, was zu Änderungen in einem Spaltabstand zwischen zwei benachbarten Säulen entlang der Spitzezu-Basis-Richtung führt.

5. Verfahren nach Anspruch 4, wobei die gewünschte durchschnittliche Säulenhöhe, durchschnittliche Säulenbreite und/oder Säulendichte ausgewählt wird, um mehrere lokalisierte Oberflächenplasmonresonanz-Modi (LSPR-Modi) zu unterstützen, wenn die Oberfläche durch ein Laserlicht einer spezifischen Wellenlänge beleuchtet wird.

6. Verfahren nach Anspruch 1, wobei die Säulenhöhe von 100 bis 1500 nm variiert und die Periodizität von 50 bis 500 nm variiert.

7. Verfahren nach Anspruch 1, wobei das Metall mindestens eines von Gold, Silber, Aluminium, Kupfer, Palladium, Nickel und Platin umfasst.

8. Verfahren nach Anspruch 1, wobei mehrere Metalle gleichzeitig oder nacheinander auf der texturierten Oberfläche abgeschieden werden.

9. Verfahren nach Anspruch 1, wobei das abgeschiedene Metall eine Dicke von mindestens 50 nm aufweist.

10. Verfahren nach Anspruch 1, wobei das Substrat ein Quarzglassubstrat (FS-Substrat), ein Quarzsubstrat oder ein Al₂O₃-Saphirsubstrat ist.

11. Verfahren nach Anspruch 1, wobei das Texturieren der Oberfläche des Substrats ein reaktives Ionenätzen (RIE), Trockenätzen, Nassätzen, Laserablation oder einen chemischen Nassprozess umfasst.

12. Verfahren nach Anspruch 1, ferner umfassend das Ausgestalten des Chips für SERS sowohl von der Seite des Substrats mit Metallbeschichtung als auch von der gegenüberliegenden Seite des Substrats ohne Metallbeschichtung.

13. Verfahren nach Anspruch 1, wobei das Tempern unter einer Atmosphäre erfolgt, die mindestens eines von N₂, H₂ und Ar umfasst.

14. Chip für oberflächenverstärkte Raman-Spektroskopie (SERS), umfassend:
ein Substrat mit einer Oberfläche, die mit einer Mehrzahl von Säulen (310) texturiert ist, die zufällig auf der Oberfläche mit einer gewünschten durchschnittlichen Säulenhöhe, durchschnittlichen Säulenbreite und/oder Säulendichte gebildet sind,
wobei die Mehrzahl von Säulen von einer Schicht aus thermisch getempertem Metall (320) umschlossen ist.

## Revendications

1. Procédé de fabrication d'une puce pour la spectroscopie Raman exaltée de surface (SERS), comprenant :
la fourniture d'un substrat (110) ;
la texturation d'une surface du substrat (120) afin de former une pluralité de piliers disposés aléatoirement, jusqu'à l'obtention d'une hauteur de pilier moyenne souhaitée, d'une largeur de pilier moyenne souhaitée et/ou d'une densité de pilier moyenne souhaitée;
le dépôt d'un métal sur la surface du substrat texturé (130) ; et
le recuit thermique du métal (140) de sorte que le métal forme une couche enrobant les piliers.

2. Procédé selon la revendication 1, comprenant en outre, avant le dépôt du métal sur la surface du substrat texturé, le revêtement de la surface du substrat texturé par des couches supplémentaires de matériau pour l'adhérence, la fonctionnalisation moléculaire ou la passivation.

3. Procédé selon la revendication 1, comprenant en outre la mise en place d'un miroir métallique sous le substrat, de sorte que la lumière transmise à travers le substrat soit réfléchie sur la couche métallique pour une deuxième interaction lumière-matière.

4. Procédé selon la revendication 1, dans lequel la largeur de chaque pilier varie de son extrémité à sa base, ce qui entraîne des variations d'un espacement entre deux piliers adjacents dans la direction de la pointe à la base.

5. Procédé selon la revendication 4, dans lequel la hauteur de pilier moyenne souhaitée, la largeur de pilier moyenne et/ou la densité de pilier sont sélectionnées afin de prendre en charge plusieurs modes de résonance plasmonique de surface localisée (LSPR) lorsque la surface est éclairée par un laser d'une longueur d'onde spécifique.

6. Procédé selon la revendication 1, dans lequel la hauteur de pilier varie de 100 à 1500 nm et la périodicité varie de 50 à 500 nm.

7. Procédé selon la revendication 1, dans lequel le métal est au moins un des suivants : or, argent, aluminium, cuivre, palladium, nickel ou platine.

8. Procédé selon la revendication 1, dans lequel plusieurs métaux sont déposés simultanément ou séquentiellement sur la surface texturée.

9. Procédé selon la revendication 1, dans lequel le métal déposé a une épaisseur d'au moins 50 nm.

10. Procédé selon la revendication 1, dans lequel le substrat est un substrat de silice fondue (FS), de quartz ou de saphir Al₂O₃.

11. Procédé selon la revendication 1, dans lequel la texturation de la surface du substrat comprend une gravure ionique réactive (RIE), une gravure sèche, une gravure humide, une ablation laser ou un procédé chimique en milieu humide.

12. Procédé selon la revendication 1, comprenant en outre la configuration de la puce pour la spectroscopie Raman exaltée de surface (SERS) à partir d'à la fois la face du substrat avec revêtement métallique et de la face opposée du substrat sans revêtement métallique.

13. Procédé selon la revendication 1, dans lequel le recuit est effectué sous une atmosphère contenant au moins un des gaz suivants : N₂, H₂ et Ar.

14. Puce pour spectroscopie Raman exaltée de surface (SERS), comprenant :
un substrat ayant une surface qui est texturée par une pluralité de piliers (310) formés aléatoirement sur la surface, avec une hauteur de pilier moyenne souhaitée, une largeur de pilier moyenne et/ou une densité de pilier;
dans lequel la pluralité de piliers sont enrobés d'une couche de métal recuit thermiquement (320).
